(19) Europäisches Patentamt
European Patent Office
Office européen des brevets

(11) Veröffentlichungsnummer: **0 147 751**
**A2**

# (12) EUROPÄISCHE PATENTANMELDUNG

(21) Anmeldenummer: **84115503.9**

(22) Anmeldetag: **15.12.84**

(51) Int. Cl.⁴: **B 01 D 53/36**
B 01 J 23/40, B 01 J 23/56

(30) Priorität: **31.07.84 DE 3428231**
**16.12.83 DE 3345675**

(43) Veröffentlichungstag der Anmeldung:
**10.07.85 Patentblatt 85/28**

(84) Benannte Vertragsstaaten:
**AT DE GB NL SE**

(71) Anmelder: **SÜD-CHEMIE AG**
**Lenbachplatz 6**
**D-8000 München 2(DE)**

(72) Erfinder: **Schneider, Michael, Dr.**
**Waldparkstrasse 54a**
**D-8012 Ottobrunn-Riemerling(DE)**

(72) Erfinder: **Kochloefl, Karl, Dr.**
**Kreuzstrasse 2**
**D-8052 Moosburg(DE)**

(72) Erfinder: **Prigge, Ditmar, Dr.**
**Silcherstrasse 5**
**D-8000 München 40(DE)**

(74) Vertreter: **Reitzner, Bruno, Dr. et al,**
**Patentanwälte Dipl.-Ing. R. Splanemann Dr. B. Reitzner**
**Tal 13**
**D-8000 München 2(DE)**

(54) **Verfahren zur Entfernung von Stickoxiden aus Abgasen.**

(57) Verfahren zur Entfernung von Stickoxiden aus Abgasen, insbesondere aus Schwefeloxide enthaltenden Abgasen, durch katalytische Reduktion; als Reduktionsmittel wird ein durch katalytische Zersetzung bzw. durch Wasserdampf-Reformierung von Methanol erhaltenes Gasgemisch mit den Abgasen vermischt und über einen Katalysator geleitet, an welchem die Stickoxide zu Stickstoff reduziert werden. Nach der ersten Variante wird mit üblichen Katalysatoren oberhalb 300°C, nach der zweiten Variante mit neuen Katalysatoren unterhalb 300°C gearbeitet.

EP 0 147 751 A2

Croydon Printing Company Ltd.

1

Die Erfindung betrifft ein Verfahren zur Entfernung von Stickoxiden aus Abgasen, insbesondere aus Schwefeloxide enthaltenden Abgasen, durch katalytische Reduktion.

Unter Abgasen versteht man erfindungsgemäß insbesondere die Abgase von Feuerungsanlagen, z.B. von Kraftwerken, Kesselanlagen, die Abgase von Motoren und Turbinen sowie die Abgase von chemischen Anlagen und von Metallbeizereien.

Unter Stickoxiden versteht man erfindungsgemäß NO, $NO_2$, $N_2O_4$, $N_2O_5$ und $N_2O$, die im allgemeinen durch die Formel $NO_x$ gekennzeichnet werden. Das wichtigste Stickoxid ist das NO.

Unter Schwefeloxiden versteht man erfindungsgemäß $SO_2$ und $SO_3$, die durch die Formel $SO_x$ gekennzeichnet werden.

Bei den in der Praxis fast ausschließlich angewendeten Verfahren zur Entfernung von Stickoxiden werden die Stickoxide mit Ammoniak als Reduktionsmittel zu Stickstoff reduziert. Für das am häufigsten vorkommende NO verläuft die Reaktion entsprechend den nachstehend angegebenen Gleichungen:

$$6NO + 4\ NH_3 \longrightarrow 5N_2 + 6H_2O \qquad (1)$$

bzw. wenn $O_2$ im Abgas vorhanden ist:

$$4NO + 4\ NH_3 + O_2 \longrightarrow 4N_2 + 6H_2O \qquad (2).$$

Beispiele für derartige Verfahren sind in den Deutschen Offenlegungsschriften 2 458 888, 2 539 003, 2 603 910, 2 705 901, 2 832 002 und 3 031 286 beschrieben. Als Katalysatoren für diese Reduktionsverfahren mit $NH_3$ werden beispielsweise solche auf der Grundlage von Eisenoxid oder Kupferoxid verwendet. Da derartige Katalysatoren jedoch in Anwesenheit von $SO_x$ leicht in die entsprechenden Sulfate umgewandelt werden, was zu einer Desaktivierung oder sogar zu einer mechanischen Zerstörung der Katalysatoren führen kann, hat man bereits Katalysatoren eingesetzt, die gegenüber $SO_x$ beständig sind. Bei diesen Katalysatoren handelt es sich in der Regel um Katalysatoren auf einem gegen $SO_x$ beständigen Trägermaterial, z.B. auf der Basis von Titandioxid mit Zusätzen von Vanadiumpentoxid, Chromtrioxid, Molybdäntrioxid, Wolframtrioxid und ähnlichen Substanzen.

Ein schwerwiegender Nachteil der Reduktionsverfahren mit $NH_3$ besteht darin, daß das in den Abgasen enthaltene $SO_2$ zu $SO_3$ oxidiert wird und dieses dann mit Ammoniak zu Ammoniumbisulfat reagiert. Das Ammoniumbisulfat scheidet sich auf den Teilen der Apparatur ab, wodurch eine mechanische Verstopfung des Leitungssystems und der nachgeschalteten Wärmetauscher auftreten kann.

Wegen dieser Nachteile der Reduktionsverfahren mit $NH_3$ hat man ferner bereits versucht, das in den Abgasen enthaltene $NO_x$ mit Hilfe von Wasserstoff, Kohlenmonoxid oder Methan als Reduktionsgasen bei Temperaturen von mehr als 300°C zu reduzieren (vgl. beispielsweise DE-OS 24 33 479). Als Katalysatoren für diese Reaktion wurden solche auf der Basis von Kupfer, Elementen aus den Gruppen der Alkali- und/oder Erdalkali- und/oder Übergangsmetalle mit einem geringeren Gehalt an Edelmetall, vorzugsweise Rhodium und/oder Ruthenium, auf Aluminiumoxid als Trägermaterial verwendet. Die Verwendung von Kupfer als Katalysatorkomponente wurde als wesentlich angesehen.

Dieses Verfahren hat sich aber in der Praxis nicht durchsetzen können, weil der Einsatz von Reduktionsgasen, insbesondere von Wasserstoff, erhebliche Transport- und Lagerprobleme bietet, da diese Gase unter Druck gehalten werden müssen.

Aus der DE-OS 25 39 346 ist ferner ein Verfahren zur Entfernungvon Stickoxiden aus Gasgemischen, z.B. aus Verbrennungs-Abgasen, durch katalytische Reduktion bekannt, wobei als Reduktionsmittel aliphatische Alkohole mit 1 bis 10 Kohlenstoffatomen verwendet werden. Das bevorzugte Reduktionsmittel ist Methanol. Die Reduktion wird bei Temperaturen von etwa 250 bis 450°C durchgeführt. Als Katalysatoren können u.a. Metalle der Platingruppe, insbesondere Iridium, auf einem Trägermaterial, wie Tonerde, verwendet werden.

Es wurde jedoch festgestellt, daß bei der Reduktion der Stickoxide mit Methanol in Anwesenheit von $SO_2$ $H_2S$ gebildet wird, der die Aktivität des Katalysators stark beeinträchtigt. Außerdem werden beider Zersetzung des Methanols an den üblichen $NO_x$-Reduktionskatalysatoren Formaldehyd, Ameisensäure und Dimethylether als unerwünschte Nebenprodukte gebildet, die dem Katalysator im Langzeitbetrieb ebenfalls desaktivieren und die Umwelt belasten.

Der Erfindung liegt die Aufgabe zugrunde, ein Verfahren der eingangs definierten Gattung zur Verfügung zu stellen, mit dessen Hilfe die mit dem Transport und der Lagerhaltung von komprimierten Gasen verbundenen Probleme behoben werden können  und das sich bezüglich der verwendeten Reduktionsmittel leicht und schnell an die jeweils im Abgas herrschenden Bedingungen anpassen läßt und nicht zu unerwünschten Nebenreaktionen und Beeinträchtigungen des Katalysators führt.

Diese Aufgabe wird erfindungsgemäß dadurch gelöst, daß man als Reduktionsmittel ein durch katalytische Zersetzung bzw. durch Wasserdampf-Reformierung von Methanol erhaltenes, im wesentlichen methanolfreies Gasgemisch mit den Abgasen vermischt und das erhaltene Gemisch über einen Katalysator leitet, an welchem die Stickoxide zu Stickstoff reduziert werden.

Die Verwendung von Methanol als Ausgangsmaterial für das reduzierende Gasgemisch hat den Vorteil, daß es im Gegensatz zu komprimierten Gasen leicht transportiert und gelagert werden kann. Das durch Zersetzung bzw. durch Wasserdampf-Reformierung erhaltene Gasgemisch kann in seiner Zusammensetzung variiert werden, wodurch eine einfache Anpassung des Reduktionsprozesses an die jeweils im Abgas herrschenden Bedingungen (wechselnder Gehalt an $NO_x$, $SO_x$ und Sauerstoff; unterschiedliche Temperaturen) möglich ist. Da das reduzierende Gasgemisch praktisch keinen Methanol mehr enthält, können an dem nachgeschalteten $NO_x$-Reduktionskatalysator keine Konkurrenz- und Nebenreaktionen mehr auftreten.

Die katalytische Zersetzung des Methanols erfolgt nach der Gleichung:

$$CH_3OH \longrightarrow CO + 2H_2 \qquad (3),$$

die katalytische Wasserdampf-Reformierung nach der Gleichung:

$$CH_3OH + H_2O \longrightarrow CO_2 + 3H_2 \qquad (4).$$

Man erkennt also, daß man durch Variieren des Molverhältnisses zwischen Methanol und $H_2O$ das Verhältnis zwischen den zur Reduktion von $NO_x$ verwendeten gasförmigen Reaktionsprodukten CO und $H_2$ in weiten Grenzen variieren kann. Vorzugsweise wendet man bei der Wasserdampf-Reformierung ein Molverhältnis zwischen Methanol und $H_2O$ von etwa 1 bis 5 an. Auch bei der Methanolzersetzung ist ein gewisser $H_2O$-Gehalt wünschenswert, um Kohlenstoffabscheidungen auf dem Katalysator zu vermeiden (Molverhältnis $H_2O : CH_3OH = 0{,}05 - 0{,}2 : 1$).

Für die Zersetzung bzw Wasserdampf-Reformierung des Methanols können an sich bekannte Katalysatoren verwendet werden, beispielsweise Edelmetall-Trägerkatalysatoren, insbesondere auf Titandioxid, Zirkondioxid oder Cerdioxid, bzw. kupferhaltige Katalysatoren.

Besonders bevorzugt verwendet man als Reformierkatalysator einen Katalysator, der

A) eine Metallkomponente aus einem der mehreren Elementen der 8. Nebengruppe des Periodensystems auf einem Trägermaterial auf der Basis

$B_1$) von $TiO_2$ oder $CeO_2$, gegebenenfalls im Gemisch mit anderen feuerfesten Metalloxiden und/oder hydraulischen Bindern oder

$B_2$) von $TiO_2$, das auf die Oberfläche des vorgeformten feuerfesten Materials aus $Al_2O_3$ oder Keramik aufgebracht ist,

enthält. Ein derartiger Katalysator ist Gegenstand der deutschen Patentanmeldung P 33 40 569.7. Die Metallkomponente dieses Katalysators stellt vorzugsweise ein oder mehrere Edelmetalle, insbesondere Platin und/oder Palladium und/oder Rhodium dar. Die Edelmetallkonzentration beträgt vorzugsweise 0,03 bis 3 Gew.-%, insbesondere 0,15 bis 0,5 Gew.-%, bezogen auf den gesamten Katalysator. Als feuerfeste Metalloxide enthält der Katalysator vorzugsweise $Al_2O_3$ und/oder $Cr_2O_3$ und als hydraulische Binder Calcium-Aluminatzement, wobei die Konzentrationen dieser Zusätze 2 bis 50 Gew.-%, insbesondere 5 bis 25 Gew.-%, bezogen auf den gesamten Katalysator, beträgt.

Der Katalysator kann dadurch erhalten werden, daß man aus $TiO_2$ oder $CeO_2$, gegebenenfalls mit anderen feuerfesten Metalloxiden, durch Verpressen Formkörper herstellt, diese calciniert und mit der Metallkomponente imprägniert. Hierbei kann man dem Titandioxid hydraulischen Binder zusetzen, nach Wasserzugabe durch Verpressen Formkörper herstellen, diese trocknen, calcinieren und mit der Metallkomponente imprägnieren. Ferner kann man der zu verpressenden Masse Gleitmittel, wie Aluminiumstearat und/oder Graphit, zusetzen.

Nach einer anderen Ausführungsform kann dieser Katalysator dadurch hergestellt werden, daß man $TiO_2$ auf die Oberfläche eines vorgeformten feuerfesten Materials, wie $Al_2O_3$ oder Keramik, aufbringt, den so behandelten Formkörper calciniert und mit der Metallkomponente imprägniert. Das $TiO_2$ wird hierbei vorzugsweise durch Imprägnieren der Formkörper mit Alkoxytitanaten, anschließender Hydrolyse und Calcinierung aufgebracht. Bei den Formkörpern handelt es sich vorzugsweise um vorgeformte Kugeln, Tabletten, Ringe oder Waben aus $Al_2O_3$ oder Keramik. Die Imprägnierung mit der Metallkomponente wird vorzugsweise unter Verwendung von wasserlöslichen Edelmetallsalzen, insbesodnere von $H_2PtCl_6$ oder $(NH_4)_2PtCl_6$ oder den entsprechenden Pd oder Rh-Salzen durchgeführt. Die Calcinierung des mit der Metallkomponente imprägnierten Trägermaterials wird vorzugsweise bei Temperaturen zwischen 450 und 650°, insbesondere zwischen 550 und 640°C durchgeführt.

Der vorstehend näher erläuterte Katalysator ermöglicht es, die Umsetzung des Methanols entweder unter den Bedingungen der Methanolspaltung (Gleichung 3) oder unter den Bedingungen der Methanoldampfreformierung (Gleichung 4) durchzuführen, wobei lediglich der Anteil des zugesetzten Wasserdampfes variiert wird. Der Katalysator ist bei unterschiedlichen Verfahrensbedingungen stabil und neigt unter den Bedingungen der Reaktion gemäß Gleichung 3 nicht zur Koksbildung.

Die Zersetzung bzw. Wasserdampf-Reformierung des Methanols wird vorzugsweise bei Temperaturen im Bereich von etwa 400 bis 600° durchgeführt. Die Raumgeschwindigkeiten liegen im allgemeinen im Bereich von etwa 0,5 bis 20 Liter/h · Liter Katalysator (bezogen auf das wasserhaltige Methanol).

Die Reduktion der Stickoxide erfolgt (für NO, dem am häufigsten vorkommenden Stickoxid) nach den Gleichungen:

$$2\ NO + 2H_2 \longrightarrow N_2 + H_2O \qquad (5)$$

$$2\ NO + 2CO \longrightarrow N_2 + CO_2 \qquad (6)$$

Für die Reduktion kommen erfindungsgemäß zwei Varianten infrage.

Nach der ersten Variante kann die Reduktion der Stickoxide mit an sich bekannten Katalysatoren bei Temperaturen im Bereich von etwa 300 bis 500°C durchgeführt werden. Üblicherweise verwendet man als Katalysatoren Edelmetallkatalysatoren, insbesondere rhodiumhaltige Trägerkatalysatoren, wobei als Trägermaterial gewöhnlich Aluminiumoxid verwendet wird. Die Katalysatoren können auch Kupfer enthalten, wie es beispielsweise in der DE-OS 24 33 479 angegeben ist.

Nach der zweiten Variante wird die Reduktion der Stickoxide mit einem Edelmetall-Trägerkatalysator durchgeführt, der auf einem inerten Grundträger eine Zwischenschicht aus $\gamma$-Aluminiumoxid, einem Siliciumdioxid oder einem Aluminiumsilicat, gegebenenfalls im Gemisch mit einem Oxid des Lanthans und/oder der Lanthaniden und in oder auf dieser Schicht ein oder mehrere Edelmetalle aus der Gruppe Ruthenium, Rhodium, Palladium und/oder Platin enthält.

Unter dem Begriff "Siliciumdioxid" versteht man erfindungsgemäß $SiO_2$ sowie hochkondensierte Kieselsäure mit wechselnden Wassergehalten, wie sie beispielsweise durch Eintrocknen und Calcinieren von Kieselsäuresolen erhalten wird. Diese Kieselsäuresole enthalten kolloides, amorphes $SiO_2$ in Konzentrationen bis zu 60 Gew.-% (vgl. Römpps Chemie-Lexikon, 8. Auflage, 1983, Seite 2108/2109).

Unter dem Begriff "Aluminiumsilicat" versteht man erfindungsgemäß Verbindungen mit unterschiedlichen Anteilen an $Al_2O_3$ und $SiO_2$. Verbindungen, in denen das Aluminium anstelle von Silicium Gitterplätze einnimmt, bezeichnet man als Alumosilicate. Die Aluminiumsilicate können zum Beispiel durch Umsetzung von Kieselsäuresolen und Alumosolen erhalten werden, wobei entsprechend den bei der Umsetzung bzw. bei der Calcinierung angewendeten Temperaturen Produkte mit wechselnden Wassergehalten erhalten werden können. Der Begriff "Alumosol" wird hierbei in Anlehnung an den Begriff "Alumogel" für eine wäßrige Dispersion von Aluminiumhydroxiden wechselnder Zusammensetzung (Verhältnis $Al_2O_3$: $H_2O$) verwendet.

Unter dem Begriff "inerter Grundträger" versteht man Trägermaterialien, insbesondere mit einer spezifischen BET-Oberfläche von weniger als 50 m²/g, vorzugsweise von weniger als 25 m²/g, die vorzugsweise mit den in den Abgasen vorhandenen Schwefeloxiden keine Sulfate bilden. Vorzugsweise beträgt der Anteil der Poren mit einem Durchmesser von mehr als 25 nm mehr als 50 %. Beispiele für inerte Grundträger, die für das erfindungsgemäße Verfahren geeignet sind, umfassen $\alpha$-Aluminiumoxid, Titandioxid, keramische Materialien und Aluminium-Magnesiumsilikate bzw. Gemische dieser Substanzen.

Durch die Aufbringung der Zwischenschicht werden die günstigen mechanischen Eigenschaften sowie die günstige Porenstruktur des Grundträgers beibehalten. Andererseits bleiben die günstigen Aktivitätseigenschaften des $\gamma$-Aluminiumoxids als Träger für die Edelmetalle erhalten.

Mit Hilfe der neuen Katalysatoren ist es möglich, die Reduktion der Stickoxide bei Temperaturen unterhalb 300°C durchzuführen. Insbesondere kann man die Reduktion im Bereich von etwa 180 bis 300°C durchführen.

Ferner kann mit Hilfe der neuen Katalysatoren die Reduktion der Stickoxide in Gegenwart eines sauerstoffhaltigen Gemisches aus Abgas und gasförmigem Reduktionsmittel durchgeführt werden. Überraschendeweise wurde festgestellt, daß mit Hilfe dieser Katalysatoren, insbesondere im Temperaturbereich unterhalb 300°C, der im Reaktionsgemisch enthaltene Sauerstoff nur zu einem geringen Teil mit dem Wasserstoff bzw. Kohlenmonoxid des Reduktionsgases reagiert. Es findet also eine selektive Reduktion der Stickoxide statt. Dieses Ergebnis ist von besonderer wirtschaftlicher Bedeutung, da die Rauchgase bis zu 10 %, üblicherweise 3 bis 6 % Sauerstoff enthalten. Auch in Anwesenheit von Schwefeloxiden findet eine selektive Reduktion von $NO_x$ statt. Ferner wurde festgestellt, daß die vorhandenen Stickoxide nicht bis zum Ammoniak durchreduziert werden, auch wenn die reduzierenden Gase einen hohen Wasserstoffgehalt haben.

Der Anteil des Materials der Zwischenschicht am gesamten Katalysator beträgt im allgemeinen 0,1 bis 15 Gew.-%, vorzugsweise etwa 1,0 bis 10 Gew.-%.

Die Edelmetallkonzentration beträgt im allgemeinen etwa 0,05 bis 1 Gew.-%, vorzugsweise 0,2 bis 0,6 Gew.-%, bezogen auf den gesamten Katalysator.

Aufgrund seiner relativ hohen Tieftemperaturaktivität und -selektivität kann der neue Katalysator unmittelbar vor dem Abgaskamin angeordnet werden, wodurch die Investititionskosten erniedrigt werden, da an dieser Stelle üblicherweise noch Platz für den Einbau neuer Anlagenteile vorhanden ist und an die Reaktorwerkstoffe wegen der niedrigeren Temperaturen nicht so hohe Anforderungen gestellt zu werden brauchen.

Ferner sind an dieser Stelle die Schwefeloxide gewöhnlich weitgehend aus den Abgasen entfernt, wodurch die durch die Schwefeloxide bedingten Belastungen des Katalysators wegfallen. Man führt also die Reduktion der Stickoxide vorzugsweise mit einem Abgas durch, dessen Schwefeldioxidgehalt in einer vorgeschalteten Reinigungsstufe auf weniger als etwa 200 ppm herabgesetzt worden ist.

Nach beiden Verfahrensvarianten verwendet man vorzugsweise ein Molverhältnis zwischen Wasserstoff aus der katalytischen Zersetzung bzw. aus der Wasserdampf-Reformierung und Stickoxiden von etwa 10 bis 2 : 1, vorzugsweise von etwa 3 bis 6 : 1.

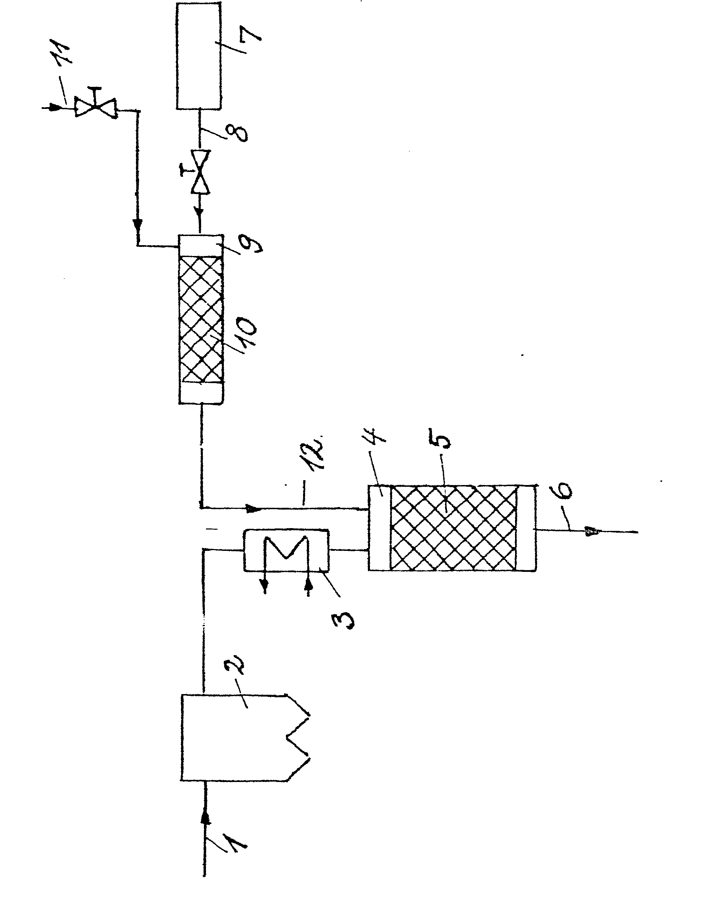

Die Erfindung ist nachstehend anhand der Zeichnung erläutert, die einen schematischen Verfahrensablauf bei der Reinigung von Kraftwerksabgasen unter Verwendung von $NO_x$-Tieftemperaturkatalysatoren darstellt.

Die Abgase gelangen durch die Leitung 1 zunächst in einen Staubabscheider 2, wobei auch ein gewisser Teil der Schwefeloxide an den alkalischen Staubteilchen gebunden wird. Die vom Staub weitgehend befreiten Abgase gelangen in einen Wärmetauscher 3, in welchem sie auf die zur Umsetzung von $NO_x$ erforderlichen Temperaturen abgekühlt werden. Die Umsetzung der Abgase erfolgt im Reaktor 4, der mit dem Katalysator 5 gefüllt ist, an welchem die Reduktion der Stickoxide zu elementarem Stickstoff stattfindet.

Die gereinigten Abgase verlassen den Reaktor 4 durch die Leitung 6.

Die zur Reduktion von $NO_x$ erforderlichen Reduktionsmittel werden wie folgt in den Reaktor 4 eingeführt:

Aus einem Vorratsbehälter 7 wird Methanol über die Leitung 8 in den Reaktor 9 geleitet, der mit einem Katalysator 10 zur Spaltung (Reaktion 3) bzw. Wasserdampf-Reformierung (Reaktion 4) gefüllt ist. Soll der Katalysator 10 unter den Bedingungen der Dampfreformierung arbeiten, so wird über die Leitung 11 Wasserdampf in den jeweils erforderlichen Verhältnissen eingeführt. Die Reaktionsgase aus dem Reaktor 9 gelangen über eine Leitung 12 in den Reaktor 4, wo sie mit den Stickoxiden umgesetzt werden.

Die Erfindung ist durch die nachstehend Beispiele noch weiter erläutert:

## Beispiel 1

Ein etwa 700 ppm NO enthaltendes Kraftwerks-Abgas ($CO_2$ = 15 %, $H_2O$ = 10 %, $O_2$ =0,4 %, $SO_2$ = 700 ppm, Rest $N_2$) wurde im Reaktor 4 bei etwa 450°C mit einem durch katalytische Dampfreformierung von Methanol erhaltenen Reduktionsgas (etwa 3 Volumteile $H_2$ und 1 Volumteil $CO_2$) umgesetzt. Als Katalysator 5 im Reaktor 4 wurde ein Rh-Cu-MgO-$Al_2O_3$-Katalysator mit 0.05 % Rh verwendet. Die Raumgeschwindigkeit beträgt etwa 3000 Liter Abgas/h • Liter Katalysator.

Die Reduktionsgase wurden dem Abgas in Mengen von 0,7 Vol.-% zugesetzt, so daß das erhaltene Gemisch etwa 0,28 Vol.-% $H_2$ enthielt.
Nach dem Durchgang durch den Katalysator 5 hatte das Abgas einen Gehalt an $NO_x$ von $<$ 150 ppm.

Die Reduktionsgase wurden wie folgt hergestellt:

Methanol aus dem Vorrat 7 wurde über die Leitung 8 in den auf 400°C aufgeheizten Reaktor 9 geleitet. Gleichzeitig wurde durch die Leitung 11 Wasserdampf eingeleitet, wobei das Mol -Verhältnis $CH_3OH$ zu $H_2O$ 1 : 1 betrug. Der im Reaktor 9 befindliche Katalysator 10 war wie folgt hergestellt worden:

Ein kommerzielles $TiO_2$ (BET Os = 45 m²/g) wurde nach Zugabe von 8 Gew.-% Al-Stearat zu 4.5 x 4.5 mm Tabletten verpreßt und diese 8 Std. auf 640°C in Luft aufgeheizt, dann 1 Std. auf 640°C gehalten und anschließend wieder auf Umgebungstemperatur abgekühlt. Nach einer Imprägnierung mit einer wäßrigen $H_2PtCl_6$-Lösung (bei 25°C) wurden die Pt-haltigen Tabletten getrocknet (120°C, 4h) und bei 400°C (2 h) nachcalciniert. Der so erhaltene Katalysator enthielt 0,3 Gew.-% Pt und hatte eine BET-Oberfläche von 40 m²/g.,ein spezifische Gewicht von 1426 g/l, eine Seitendruckfestigkeit von 17,3 kg und ein Porenvolumen von 0,13 ml/g.

Nach dem Durchgang des $CH_3OH/H_2O$-Gemisches durch den Katalysator konnte in den Reaktionsgasen kein Methanol mehr festgestellt werden.

## Beispiel 2

Ein etwa 200 ppm NO enthaltendes Rauchgas ($CO_2$ = 12 %, $H_2O$ = 12 %, $O_2$ = 3 %, $SO_x$ = 600 ppm, Rest $N_2$) wurde im Reaktor 4 bei einer Temperatur von etwa 450°C mit einem Reduktionsgas umgesetzt, das im wesentlichen durch katalytische Zersetzung von Methanol erhalten worden war, d.h. dem Methanol wurden lediglich 2 % Wasser zugesetzt. Die Zusammensetzung des Reduktionsgases (in Vol.-%) war wie folgt: CO = 28,5 %, $H_2$ = 65,1 %, $CO_2$ = 3,4 %, $CH_4$ = 3 %. Als Katalysator 5 im Reaktor 4 wurde ein Katalysator verwendet, der durch Aufbringen von Ammoniummetavanadat auf Metatitansäure und Calcinieren bei 400 bis 550°C erhalten worden war (Atomverhältnis Ti:V = 94 : 6). Die Raumgeschwindigkeit betrug etwa 3000 Liter Abgas/h · Liter Katalysator.

Die Reduktionsgase wurden dem Rauchgas in Mengen von etwa 0,2 Vol.-% zugesetzt.

Nach dem Durchgang durch den Katalysator 5 hatte das Rauchgas einen Gehalt an NO von $<40$ ppm.

Die Reduktionsgase wurden wie folgt hergestellt.

Methanol aus dem Vorrat 7 wurde über die Leitung 8 in den auf 400°C aufgeheizten Reaktor 9 geleitet. Gleichzeitig wurde durch die Leitung 11 Wasserdampf in einer Menge von 2 Gew.-% des eingesetzten Methanols eingeleitet. Der im Reaktor 9 befindliche Katalysator entsprach dem Katalysator vom Beispiel 1.

Die folgenden Beispiele erläutern die Reduktion der Stickoxide an den neuen Tieftemperaturkatalysatoren. Die Herstellung dieser Katalysatoren ist nachstehend angegeben.

## Herstellungsbeispiele

### A Herstellung der Träger:

Träger T 1:
147,2 g $Al(NO_3)_3 \cdot 9\ H_2O$ wurden in dest. Wasser gelöst und die Lösung auf ein Volumen von 245 ml verdünnt. 200 g eines $\alpha$-$Al_2O_3$-Trägers (Tabletten mit 3,7 mm Durchmesser und 3,5 mm Höhe; BET-Oberfläche = 4,0 $m^2/g$; Hg-Porenvolumen = 0,24 ml/g; Wasseraufnahmefähigkeit = 0,25 ml/g) wurden 20 Minuten in die auf 70-80°C erwärmte Al-Nitratlösung getaucht. Nach dem Abtropfen der überschüssigen Lösung wurden die Tabletten 2 Stunden bei 400°C calciniert, wobei das Al-Nitrat in $\gamma$-$Al_2O_3$ umgewandelt wurde. Der so erhaltene Träger T 1 enthielt 2,0 % $\gamma$-$Al_2O_3$ als Auflage.

Träger T 2:

100 g eines kommerziellen Aluminiumoxidhydrats wurden unter Rühren in 400 ml 1,2 %iger $HNO_3$ eingetragen. In die erhaltene Dispersion wurden 150 g $\alpha$-$Al_2O_3$-Tabletten (wie bei T 1) 20 Minuten eingetaucht. Nach dem Abtropfen der überschüssigen Dispersion wurden die Tabletten 3 Stunden bei 400°C calciniert. Der so erhaltene Träger T 2 enthielt 2,1 % $\gamma$-$Al_2O_3$ als Auflage.

Träger T 3:

132,5 g $Al(NO_3)_3 \cdot 9\ H_2O$ und 5,3 g $La(NO_3)_3 \cdot 6\ H_2O$ wurden in dest. Wasser gelöst und die Lösung auf ein Volumen von 245 ml verdünnt. 150 g eines $\alpha$-$Al_2O_3$-Trägers (wie bei T 1) wurden in die auf 70-80°C erwärmte Nitratlösung wie bei T 1 beschrieben, eingetaucht und anschließend 3 Stunden bei 400°C calciniert. Der erhaltene Träger T 3 enthielt 1,8 % $\gamma$-$Al_2O_3$ und 0,2 % $La_2O_3$ als Auflage.

Träger T 4:

132,5 g $Al(NO_3)_3 \cdot 9\ H_2O$ und 4,5 g Nitratgemisch der Seltenen Erden (das Nitratgemisch ergibt bei der thermischen Zersetzung ein Oxidgemisch, REO, mit 60 % $La_2O_3$, 15 % $CeO_2$, 17,5 % $Nd_2O_3$, 7,5 % $Pr_6O_{11}$) wurden in dest. Wasser gelöst und die Lösung auf ein Volumen von 245 ml gebracht. 150 g eines $\alpha$-$Al_2O_3$-Trägers (wie bei T 1) wurden in die auf 70-80°C erwärmte Nitratlösung 20 Minuten eingetaucht und nach dem Abtropfen der überschüssigen Lösung 3 Stunden bei 400°C calciniert. Der erhaltene Träger T 4 enthielt 1,8 % $\gamma$-$Al_2O_3$ und 0,2 % REO als Auflage.

Träger T 5:

147,2 g $Al(NO_3)_3 \cdot 9\ H_2O$ wurden in dest. Wasser gelöst und auf ein Volumen von 245 ml gebracht. 150 g eines Cordierit-Trägers (2 $MgO \cdot 2\ Al_2O_3 \cdot 5\ SiO_2$; 4,0 Extrudat mit BET-Oberfläche = 0,5 m²/g; Wasseraufnahme = 0,24 ml/g) wurden 20 Minuten in die auf 70-80°C erwärmte Nitratlösung getaucht; nach dem Abtropfen der überschüssigen Tauchlösung wurde 3 Stunden bei 400°C calciniert. Der so erhaltene Träger T 5 enthielt 2,1 % $\gamma$-$Al_2O_3$ als Auflage.

Träger T 6:

150 g eines Cordierit-Trägers (2MgO · $Al_2O_3$ · 5 $SiO_2$; 4,0 mm Extrudat mit einer BET-Oberfläche von 0,5 m²/g; Wasseraufnahmefähigkeit = 0,24 ml/g) wurden 20 Minuten in ein Kieselsol mit 10 % $SiO_2$-Gehalt getaucht; nach Abtropfen der überschüssigen Tauchlösung wurde 3 Stunden bei 400°C calciniert. Der so erhaltene Träger T 6 enthielt 2,5 % $SiO_2$ als Auflage.

Träger T 7:

150 g eines Cordierit-Trägers (wie für Träger T 6 verwendet) wurden in einer Mischung gleicher Teile Kieselsol mit 10 % $SiO_2$ und Alumo-Sol mit 10 % $Al_2O_3$ 20 Minuten getaucht; nach Abtropfen der überschüssigen Tauchlösung wurde 3 Stunden bei 400°C calciniert. Der so erhaltene Träger T 7 enthielt 1,2 % $SiO_2$ und 1,2 % $Al_2O_3$ als Auflage

B Herstellung der Katalysatoren:

Vergleichkatalysator A:

100 g eines $\gamma$-$Al_2O_3$-Trägers (4x4 mm Tabletten mit BET-Oberfläche = 181 m²/g; Hg-Porenvolumen = 0,16 ml/g; Wasseraufnahmefähigkeit = 0,42 ml/g) wurden mit einer Lösung von 0,98 g Rhodium-(III)-chloridhydrat in 15 ml $H_2O$ besprüht und wie bei K 1 beschrieben, getrocknet und calciniert. Die physikalischen und chemischen Daten des Katalysators sind in Tabelle I angegeben.

Katalysator K 1:

100 g des Trägers T 1 wurden mit einer Lösung von 0,98 g Rhodium-(III)-chloridhydrat (35,8 % Rh) in 15 ml $H_2O$ gleichmäßig besprüht. Danach wurden die Tabletten bei 120°C 2 Stunden getrocknet undsodann 1 Stunde bei 200°C und 2 Stunden bei 400°C calciniert. Die physikalischen und chemischen Daten des Katalysators K 1 sind in Tabelle I angegeben.

Katalysator K 2:

100 g des Trägers T 2 wurden, wie bei K 1 beschrieben, mit Rh belegt. Die physikalischen und chemischen Daten des Katalysators K 2 sind in Tabelle I angegeben.

0147751

Katalysator K 3:

100 g des Trägers T 3 wurden, wie bei K 1 beschrieben, mit Rh belegt. Die physikalischen und chemischen Daten des Katalysators K 3 sind in Tabelle I angegeben.

Katalysator K 4:

100 g des Trägers T 4 wurden, wie bei K 1 beschrieben, mit Rh belegt. Die physikalischen und chemischen Daten von Katalysator K 4 sind in Tabelle I angegeben.

Katalysator K 5:

100 g des Trägers T 5 wurden. wie bei K 1 beschrieben, mit Rh belegt. Die physikalischen und chemischen Daten von Katalysator K 5 sind in Tabelle I angegeben.

Katalysator K 6:

100 g des Trägers T 1 wurden mit einer Lösung von 1,12 g Ruthenium-(III)-chloridhydrat (35,65 % Ru) in 15 ml $H_2O$ gleichmäßig besprüht. Die Trocknung und Calcinierung erfolgten wie bei Katalysator K 1 beschrieben. Die physikalischen und chemischen Daten von Katalysator K 6 sind in Tabelle I angegeben.

Katalysator K 7:

100 g des Trägers T 6 wurden, wie bei K 1 beschrieben, mit Rh belegt. Die physikalischen und chemischen Daten von Katalysator K 7 sind in Tabelle I angegeben.

Katalysator K 8:

100 g des Trägers T 7 wurden, wie bei K 1 beschrieben, mit Rh belegt. Die physikalischen und chemischen Daten von Katalysator K 8 sind in Tabelle I angegeben.

Tabelle I

Chemische und physikalische Daten der Katalysatoren

| Katalysator | Hauptbest. d. Zwischenschicht (%) | $La_2O_3$ (%) | REO* (%) | Rh (%) | Ru (%) | BET $O_S$ ($m^2/g$) | Porenvolumen Hg-Penetration (ml/g) |
|---|---|---|---|---|---|---|---|
| A | 100 $\gamma$-$Al_2O_3$ | - | - | 0,35 | - | 180 | 0,16 |
| K 1 | 2,0 " | - | - | 0,35 | - | 6,0 | 0,21 |
| K 2 | 2,1 " | - | - | 0,35 | - | 6,0 | 0,20 |
| K 3 | 1,8 " | 0,2 | - | 0,35 | - | 5,9 | 0,20 |
| K 4 | 1,8 " | - | 0,2 | 0,35 | - | 6,0 | 0,21 |
| K 5 | 2,1 " | - | - | 0,35 | - | 4,1 | 0,10 |
| K 6 | 2,0 " | - | - | - | 0,40 | 6,1 | 0,21 |
| K 7 | 2,5 $SiO_2$ | - | - | 0,35 | - | 6,5 | 0,21 |
| K 8 | 2,5 $SiO_2 \cdot Al_2O_3$ | - | - | 0,35 | - | 6,4 | 0,21 |

*REO = Oxidgemisch der Seltenen Erden mit 60 % $La_2O_3$, 15 % $CeO_2$, 17,5 % $Nd_2O_3$, 7,5 % $Pr_6O_{11}$

Beispiele 3 bis 10

Ein Modellgas mit der Zusammensetzung: NO = 1000 ppm, $SO_2$ = 1000 ppm, $O_2$ = 3 Vol.-%, $H_2O$ = 10 Vol.-%, Rest $N_2$ wurde in einem Versuchsreaktor bei 240 °C mit dem durch katalytische Dampfreformierung von Methanol nach Beispiel 1 erhaltenen Reduktionsgas über die in Tabelle I angegebenen Katalysatoren geleitet. Die Raumgeschwindigkeit betrug 3000 Liter Abgas/h · Liter Katalysator; das Molverhältnis zwischen $H_2$ im Reaktionsgas und NO im Abgas betrug 5 : 1.

Die mit den einzelnen Katalysatoren erzielten NO-Umsätze sind in Tabelle II angegeben.

Tabelle II

$NO_x$-Entfernung mit $H_2$ als Reduktionsmittel

| Beispiel | Katalysator | Träger | $NO_x$-Umsatz(%) |
|---|---|---|---|
| 3 | K 1 | T 1 | 78 |
| 4 | K 2 | T 2 | 75 |
| 5 | K 3 | T 3 | 81 |
| 6 | K 4 | T 4 | 79 |
| 7 | K 5 | T 5 | 77 |
| 8 | K 6 | T 1 | 80 |
| 9 | K 7 | T 6 | 80 |
| 10 | K 8 | T 7 | 81 |
| Vergl.- Beisp. | A | $\gamma$-$Al_2O_3$ | 72 |

K 1 = Rh (0,35 %)
K 2 = Rh (0,35 %)
K 3 = Rh (0,35 %)
K 4 = Rh (0,35 %)
K 5 = Rh (0,35 %)
K 6 = Ru (0,40 %)
K 7 = Rh (0,35 %)
K 8 = Rh (0,35 %)
A = Rh (0,35 %)

T 1 = $\alpha$-$Al_2O_3$ mit 2 % $\gamma$-$Al_2O_3$ aus $Al(NO_3)_3$
T 2 = $\alpha$-$Al_2O_3$ mit 2 % $\gamma$-$Al_2O_3$ aus $Al(OH)_3$
T 3 = $\alpha$-$Al_2O_3$ mit 1,8% $\gamma$-$Al_2O_3$+0,2% $La_2O_3$
T 4 = $\alpha$-$Al_2O_3$ mit 1,8% $\gamma$-$Al_2O_3$+0,2% REO
T 5 = Cordierit mit 2 % $\gamma$-$Al_2O_3$
T 6 = Cordierit mit 2,5 % $SiO_2$
T 7 = Cordierit mit 2,5 % $SiO_2 \cdot Al_2O_3$

Tabelle II zeigt, daß die neuen Katalysatoren K 1 bis K 8 gegenüber dem Vergleichskatalysator A deutlich höhere NO-Umsätze liefern. Ferner wurde festgestellt, daß die Aktivität des Vergleichskatalysators A im Langzeitversuch schneller abnahm als die der neuen Katalysatoren K 1 bis K 8.

Verfahren zur Entfernung von
Stickoxiden aus Abgasen

## PATENTANSPRÜCHE

1. Verfahren zur Entfernung von Stickoxiden aus Abgasen, insbesondere aus Schwefeloxide enthaltenden Abgasen, durch katalytische Reduktion, dadurch gekennzeichnet, daß man als Reduktionsmittel ein durch katalytische Zersetzung bzw. durch Wasserdampf-Reformierung von Methanol erhaltenes, im wesentlichen methanolfreies Gasgemisch über einen Katalysator leitet, an welchem die Stickoxide zu Stickstoff reduziert werden.

2. Verfahren nach Anspruch 1, dadurch gekennzeichnet, daß man für die Zersetzung bzw. Wasserdampf-Reformierung des Methanols an sich bekannte Katalysatoren verwendet.

3. Verfahren nach Anspruch 2, dadurch gekennzeichnet, daß man als Katalysatoren Edelmetall-Trägerkatalysatoren, insbesondere auf Titandioxid, Zirkondioxid oder Cerdioxid bzw. kupferhaltige Katalysatoren verwendet.

4. Verfahren nach Anspruch 1 bis 3, dadurch gekennzeichnet, daß man einen Katalysator verwendet, der

A) eine Metallkomponente aus einem oder mehreren Elementen der 8. Nebengruppe des Periodensystems auf einem Trägermaterial auf der Basis

$B_1$) von $TiO_2$ oder $CeO_2$, gegebenenfalls im Gemisch mit anderen feuerfesten Metalloxiden und/oder hydraulischen Bindern oder

$B_2$) von $TiO_2$, das auf die Oberfläche des vorgeformten feuerfesten Materials aus $Al_2O_3$ oder Keramik aufgebracht ist,

enthält .

5. Verfahren nach einem der Ansprüche 1 bis 4, dadurch gekennzeichnet, daß man bei der Wasserdampf-Reformierung ein Molverhältnis zwischen Methanol und $H_2O$ von etwa 1 bis 5 anwendet.

6. Verfahren nach einem der Ansprüche 1 bis 5, dadurch gekennzeichnet, daß man die Zersetzung bzw. Wasserdampf-Reformierung des Methanols bei Temperaturen im Bereich von etwa 400 bis 600°C durchführt.

7. Verfahren nach einem der Ansprüche 1 bis 6, dadurch gekennzeichnet, daß man die Reduktion der Stickoxide mit an sich bekannten Katalysatoren bei Temperaturen im Bereich von etwa 300 bis 500°C durchführt.

8. Verfahren nach Anspruch 7, dadurch gekennzeichnet, daß man als Katalysatoren für die Stickoxid-Reduktion edelmetallhaltige, insbesondere ruthenium-, rhodium-, platin- oder palladiumhaltige Trägerkatalysatoren verwendet.

9. Verfahren nach einem der Ansprüche 1 bis 6, dadurch gekennzeichnet, daß man die Reduktion der Stickoxide mit einem Edelmetall-Trägerkatalysator durchführt, der auf einem inerten Grundträger eine Zwischenschicht aus $\gamma$-Aluminiumoxid, einem Siliciumdioxid oder einem Aluminiumsilicat, und gegebenenfalls einem Oxid des Lanthans und/oder der Lanthaniden und in oder auf dieser Schicht ein oder mehrere Edelmetalle aus der Gruppe Ruthenium, Rhodium, Palladium und/oder Platin enthält.

10. Verfahren nach Anspruch 9, dadurch gekennzeichnet, daß man als inerten Grundträger $\alpha$-Aluminiumoxid, Titandioxid, ein keramisches Material und/oder ein Aluminium-Magnesiumsilicat verwendet.

11. Verfahren nach Anspruch 9 oder 10, dadurch gekennzeichnet, daß der inerte Grundträger eine spezifische Oberfläche von weniger als 50 $m^2/g$ hat und der Anteil der Poren mit einem Durchmesser von mehr als 25 nm mehr als 50 % beträgt.

12. Verfahren nach einem der Ansprüche 9 bis 11, dadurch gekennzeichnet, daß der Anteil des Materials der Zwischenschicht am gesamten Katalysator etwa 0,1 bis 15 Gew.-%, vorzugsweise etwa 1,0 bis 10 Gew.-% beträgt.

13. Verfahren nach einem der Ansprüche 9 bis 12, dadurch gekennzeichnet, daß man einen Katalysator mit einer Edelmetallkonzentration von etwa 0,01 bis 1 Gewichtsprozent, vorzugsweise von etwa 0,1 bis 0,6 Gewichtsprozent, bezogen auf den gesamten Katalysator, verwendet.

14. Verfahren nach einem der Ansprüche 1 bis 6 und 9 bis 13, dadurch gekennzeichnet, daß man die Reduktion der Stickoxide bei Temperaturen unterhalb 300°C, vorzugsweise im Bereich von etwa 180 bis 300°C durchführt.

15. Verfahren nach einem der Ansprüche 1 bis 14, dadurch gekennzeichnet, daß man ein Molverhältnis zwischen Wasserstoff und Stickoxiden von etwa 10 bis 2 : 1, vorzugsweise von etwa 6 bis 3 : 1, anwendet.

0147751

1/1